## Europäisches Patentamt

## European Patent Office

## Office européen des brevets

Veröffentlichungsnummer: **0 314 889 B1**

## EUROPÄISCHE PATENTSCHRIFT

Veröffentlichungstag der Patentschrift: **15.01.92**

Int. Cl.⁵: **G01G 19/413**, B65C 9/26

Anmeldenummer: **88113664.2**

Anmeldetag: **23.08.88**

Selbstbedienungswaage.

Priorität: **02.11.87 DE 3737103**

Veröffentlichungstag der Anmeldung:
**10.05.89 Patentblatt 89/19**

Bekanntmachung des Hinweises auf die
Patenterteilung:
**15.01.92 Patentblatt 92/03**

Benannte Vertragsstaaten:
**AT BE CH ES FR GB IT LI NL SE**

Entgegenhaltungen:
**EP-A- 0 087 310**
**FR-A- 2 577 041**
**US-A- 4 101 366**

Patentinhaber: **Firma Espera-Werke GmbH**
**Moltkestrasse 17 - 33**
**W-4100 Duisburg(DE)**

Erfinder: **Korthäuer, Manfred**
**Grossenbaumer Strasse 108**
**W-4330 Mülheim(DE)**

Vertreter: **Sroka, Peter-Christian, Dipl.-Ing. et
al**
**Dominikanerstrasse 37 Postfach 111038**
**W-4000 Düsseldorf 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Selbstbedienungswaage für in einen Behälter, insbesondere Folienbeutel, eingefüllte Ware, mit einer Auswägeeinrichtung und einem daran gekoppelten Lastträger, an den der mit Ware gefüllte Behälter angehängt wird, einem Druckwerk zum Ausdrucken eines selbstklebenden Haftetiketts, das von dem Wägevorgang und dem Grundpreis der Ware abgeleitete Informationen enthält, und mit einer Etikettenausgabe zum Anbringen des bedruckten Etiketts an dem Behälter.

Bei einer in der EP-A 0 087 310 beschriebenen Selbstbedienungswaage wird ein mit Ware gefüllter, noch nicht verschlossener Beutel mittels beweglicher Klemmorgane an dem Lastträger angehängt, um die Ware auszuwiegen. Basierend auf den gewogenen Werten und vorher eingegebenen Warenwerten wird dann ein Etikett ausgedruckt, das anschließend mittels einer relativ aufwendigen Vorrichtung zum Verschließen des Beutels um das offene Beutelende herumgeklebt wird. Bei dieser bekannten Selbstbedienungswaage wird das bedruckte Etikett zuerst an ein weiterführendes Element übertragen, von dem es dann um den Beutel herumgeklebt wird. Dieser Vorgang ist relativ aufwendig und bedingt einen relativ hohen maschinellen Aufwand.

Der Erfindung liegt die Aufgabe zugrunde, eine demgegenüber in konstruktiver und funktioneller Hinsicht einfachere Selbstbedienungswaage zu schaffen.

Zur Lösung dieser Aufgabe ist die erfindungsgemäße Selbstbedienungswaage dadurch gekennzeichnet, daß der Lastträger schwenkbar an der Auswägeeinrichtung angelenkt ist und zwischen einer ersten Position, in der das Auswiegen der Ware, das Ausdrucken des Etiketts und der Transport des Etiketts zur Etikettenausgabe erfolgen, und einer zweiten Position verschwenkbar ist, in der der Behälter sich zum Aufkleben des Etiketts im Bereich der Etikettenausgabe befindet.

Bei der erfindungsgemäßen Lösung wird die Schwerkraft des Lastträgers und des daran angehängten Behälters dazu benutzt, den Behälter zum Aufkleben des Etiketts in den Bereich der Etikettenausgabestelle zu verbringen.

Weitere Merkmale der Erfindung ergeben sich aus den abhängigen patentansprüchen.

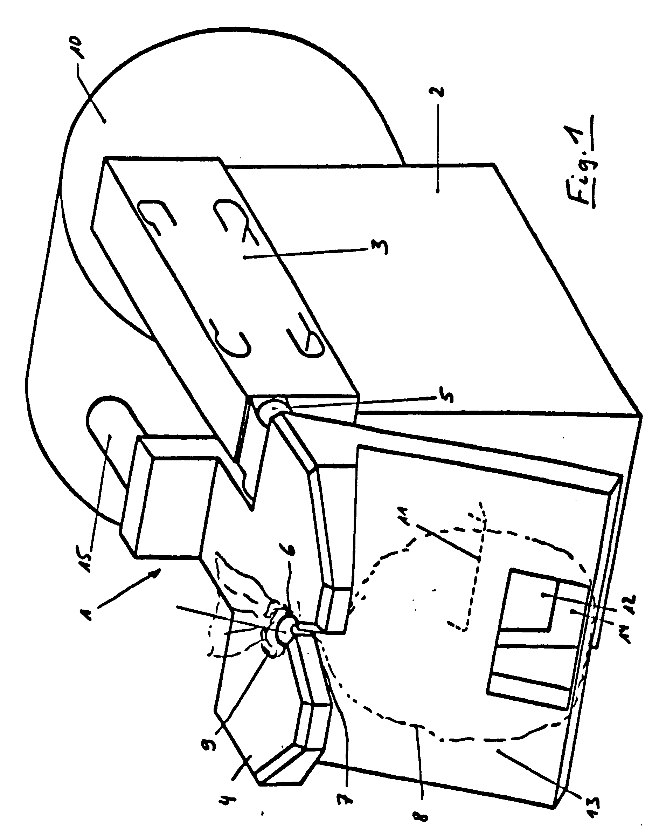

Die Erfindung wird im folgenden anhand der Figur 1 beschrieben, die schematisch eine isometrische Darstellung der erfindungsgemäßen Selbstbedienungswaage zeigt.

Die erfindungsgemäße Waage 1 umfaßt ein Etikettendruckwerk 2 und ein Meßsystem bzw. eine Auswägeeinrichtung 3, mit dem ein Lastträger 4 rückwirkungsfrei schwenkbar gekoppelt ist. Der Lastträger 4 ist derart mit der Auswägeeinrichtung 3 über die Schwenkachse 5 verbunden, daß das Gewicht eines an dem Lastträger 4 angebrachten, mit Ware gefüllten Beutels 8 von der Auswägeeinrichtung 3 erfaßt und angezeigt werden kann.

Dem Druckwerk 2 ist ein in der Zeichnung nicht dargestelltes Etikettenförderwerk zugeordnet, mit dem von einer Etikettenrolle 10, bestehend aus einem Trägerband und darauf ablösbar angebrachten Einzeletiketten die Etiketten dem Druckwerk 2 zugeführt und an eine Etikettenausgabe 11 weitergefördert werden, die in der Zeichnung durch eine Etikettenabstreifkante repräsentiert ist. Das Etikettenwerk und das Druckwerk sind so gestaltet, daß die notwendigen warenbezogenen Gewichts- und Preiswerte jeweils auf einem Einzeletikett ausgedruckt werden und das Einzeletikett dann der Etikettenabstreifkante so zugeführt wird, daß es an der Vorderseite des Druckwerkgehäuses die Position einnimmt. Bei den Etiketts 12 handelt es sich um selbstklebende Haftetiketts, die an der Etikettenausgabe 11 so positioniert werden, daß ihre Klebeseite weg vom Druckwerkgehäuse 2 nach außen hin liegt.

Der Lastträger 4 hat im wesentlichen die Form einer horizontal ausgerichteten Platte, die eine Öffnung 6 aufweist, die durch einen zum Plattenrand offenen, sich vorzugsweise nach außen hin trichterförmig erweiternden Schlitz 7 vom Plattenrand her zugänglich ist. Die Größe der Öffnung 6 ist derart, daß ein in der Zeichnung nur schematisch dargestellter, mit Ware gefüllter Beutel 8, insbesondere Folienbeutel, der in die Öffnung 6 eingeführt wird, nur dann an dem Lastträger festgehalten wird, wenn er am oberen Ende mit einem Knoten 9 verschlossen ist. Der Lastträger 4 ist somit so ausgebildet, daß an ihm ein mit Ware gefüllter Beutel nur nach Bildung eines den Beutel verschließenden Knotens 9 unter Einbeziehung des Knotens 9 angehängt werden kann.

An die im wesentlichen horizontal ausgerichtete Platte des Lastträgers 4 schließt an der der Etikettenausgabe 11 zugewandten Seite eine zweite, schräg nach unten und weg von der Etikettenausgabe 11 gerichtete Platte 13 an, die in der in der Zeichnung dargestellten Position des Lastträgers mit Abstand von der Etikettenausgabe liegt und ein der Etikettenausgabe gegenüberliegendes Fenster 14 aufweist, und aufgrund ihrer Schrägstellung ein Pendeln bzw. Schwingen eines eingehängten Beutels verhindert, indem sie als Stützfläche für den Beutel wirkt.

Der schwenkbar an der Auswägeeinrichtung 3 angelenkte Lastträger 4 ist zwischen einer ersten, in der Figur 1 dargestellten Position, in der das Auswiegen der angehängten Ware, das Ausdrukken des Etiketts und der Transport des Etiketts zur Etikettenausgabe 11 erfolgen, und einer zweiten Position verschwenkbar, in der die Platte 13 in Richtung auf die Etikettenausgabe 11 verschwenkt ist, derart, daß das sich im Bereich der Etikettenausgabe 11 befindliche, fertig bedruckte Haftetikett 12 durch das Fenster 14 hindurch an dem mit Ware gefüllten Beutel festgeklebt wird.

Das Verschwenken des belasteten Lastträgers zwischen seiner ersten und zweiten Position erfolgt stets unter dem Einfluß der Schwerkraft, so daß in diesem Zusammenhang auf ein Antriebsaggregat verzichtet werden kann.

Um den Lastträger 4 in seiner ersten Position zu halten, ist eine rückwirkungsfrei mit der Auswägeeinrichtung 3 verbundene, temporär wirksame Halteeinrichtung 15 zum Arretieren des Lastträgers in seiner ersten Position und zur Freigabe des Lastträgers zwecks Verschwenken in seine zweite Position vorgesehen. Die Halteeinrichtung ist vorzugsweise magnetisch wirksam und weist gemäß einer ersten Ausführungsform einen Elektromagneten auf, der in seinem erregten Zustand den zumindest mit einem Einsatzkörper aus ferromagnetischem Material bestückten Lastträger in seiner ersten Position hält und im unerregten Zustand den Lastträger zum Verschwenken in seine zweite Position freigibt, wobei der Elektromagnet in seinem erregten Zustand eine Anziehungskraft auf den Lastträger ausübt.

Gemäß einer abgewandelten Ausführungsform umfaßt die Halteeinrichtung 15 einen Permanentmagneten, der den Lastträger durch Anziehungskraft in seiner ersten Position hält, und einen Elektromagneten, der in seinem erregten Zustand auf den Lastträger eine abstoßende Kraft ausübt, die größer ist als die von dem Permanentmagneten ausgeübte Anziehungskraft.

Der Lastträger 4 ist gewichtsmäßig so ausbalanciert, daß er in seinem unbelasteten Zustand in eine solche Stellung kippt, die der ersten Position des Lastträgers entspricht, wo er von der Halteeinrichtung 15 festgehalten wird. Bei Einhängen einer Last hält die Halteeinrichtung den Lastträger mit der eingehängten Last in der gleichen Relativposition (Position 1 des Lastträgers) zur Auswägeeinrichtung 3, und in diesem Zustand erfolgt die Wägung. Nach dem Wägevorgang und der Preisberechnung wird ein entsprechendes Etikett 12 ausgedruckt und zur Etikettenausgabe 11, daß heißt in den freien Raum hinter dem Fenster 14 gebracht, derart, daß die Klebeseite des Etiketts zum Fenster 14 hin gewandt ist.

Danach wird die Halteeinrichtung 15 freigegeben, so daß der Lastträger mit der eingehängten Ware um die Schwenkachse 5 relativ zur Auswägeeinrichtung 3 in Richtung auf das Etikett 12 verschwenkt wird. Der Lastträger 4 ist weiterhin so ausbalanciert, daß er nach seiner Freigabe im belasteten Zustand mit seiner Platte 13 nach hinten in Richtung auf das bereitgestellte Etikett 12 verschwenkt, wodurch der die Ware aufnehmende Folienbeutel mit der Klebeseite des Etiketts 12 in Kontakt kommt, so daß das bedruckte Etikett 12 an dem Beutel 8 festgeklebt wird. Nach der Abnahme des Beutels 8 schwenkt der Lastträger wieder in die in Figur 1 dargestellt Ruheposition (erste Position des Lastträgers) zurück.

## Patentansprüche

1. Selbstbedienungswaage für in einen Behälter, insbesondere Folienbeutel, eingefüllte Ware, mit einer Auswägeeinrichtung und einem daran gegekoppelten Lastträger, an den der mit Ware gefüllte Behälter angehängt wird, einem Druckwerk zum Ausdrucken eines selbstklebenden Haftetiketts, das von dem Wägevorgang und dem Grundpreis der Ware abgeleitete Informationen enthält, und mit einer Etikettenausgabe zum Anbringen des bedruckten Etiketts an dem Behälter, dadurch gekennzeichnet, daß der Lastträger (4) schwenkbar an der Auswägeeinrichtung (3) angelenkt ist und zwischen einer ersten Position, in der das Auswiegen der Ware, das Ausdrucken des Etiketts und der Transport des Etiketts zur Etikettenausgabe (11) erfolgen, und einer zweiten Position verschwenkbar ist, in der der Behälter sich zum Aufkleben des Etiketts im Bereich der Etikettenausgabe (11) befindet.

2. Selbstbedienungswaage nach Anspruch 1, gekennzeichnet durch eine rückwirkungsfrei mit der Auswägeeinrichtung (3) verbundene, temporar wirksame Halteeinrichtung (15) zum Arretieren des Lastträgers (4) in seiner ersten Position und zur Freigabe des Lastträgers (4) zwecks Verschwenken in seine zweite Position.

3. Selbstbedienungswaage nach Anspruch 2, dadurch gekennzeichnet, daß die Halteeinrichtung (15) magnetisch wirksam ist.

4. Selbstbedienungswaage nach Anspruch 3, dadurch gekennzeichnet, daß die Halteeinrichtung (15) einen Elektromagneten aufweist, der in seinem erregten Zustand den zumindest mit einem Einsatzkörper aus ferromagnetischem Material bestückten Lastträger (4) in seiner ersten Position hält und im unerregten Zustand den Lastträger (4) zum Verschwenken in dessen zweite Position freigibt.

5. Selbstbedienungswaage nach Anspruch 4, dadurch gekennzeichnet, daß der Elektromagnet in seinem erregten Zustand eine Anziehungskraft auf den Lastträger (4) ausübt.

**6.** Selbstbedienungswaage nach Anspruch 3, dadurch gekennzeichnet, daß die Halteeinrichtung (15) einen Permanentmagneten, der den zumindest mit einem Einsatzkörper aus ferromagnetischem Material bestückten Lastträger (4) durch Anziehungskraft in seiner ersten Position hält, und einen Elektromagneten umfaßt, der in seinem erregten Zustand auf den Lastträger (4) eine abstoßende Kraft ausübt, die größer ist als die vom Permanentmagneten ausgeübte Anziehungskraft.

**7.** Selbstbedienungswaage nach Anspruch 1, dadurch gekennzeichnet, daß der Lastträger (4) so ausgebildet ist, daß an ihm ein Behälter in Form eines Beutels (8), insbesondere Folienbeutels, nur nach Bildung eines den Beutel (8) verschließenden Knotens (9) unter Einbeziehung des Knotens (9) angehängt werden kann.

**8.** Selbstbedienungswaage nach Anspruch 7, dadurch gekennzeichnet, daß der Lastträger (4) im wesentlichen die Form einer Platte hat, die eine Öffnung (6) aufweist, die durch einen zum Plattenrand offenen Schlitz (7) zugänglich und kleiner ist als ein an dem Beutel (8) gebildeter Knoten (9).

**9.** Selbstbedienungswaage nach Anspruch 8, dadurch gekennzeichnet, daß an die im wesentlichen horizontal ausgerichtete Platte des Lastträgers (4) an der der Etikettenausgabe (11) zugewandten Seite eine zweite, schräg nach unten und weg von der Etikettenausgabe (11) gerichtete Platte (13) anschließt, die in der ersten Position des Lastträgers (4) mit Abstand von der Etikettenausgabe (11) liegt und ein der Etikettenausgabe (11) gegenüberliegendes Fenster (14) aufweist und eine Pendelbewegung eines eingehängten Beutels (8) verhindert.

## Claims

**1.** A self-service weighing machine for goods filled into a container, in particular a foil bag, with a weighing-out mechanism and a load carrier which is coupled thereto and from which the container filled with goods is attached, a printing mechanism for printing out a self-adhering adhesive label which contains items of information derived from the weighing procedure and the basic price of the goods, and with a label issuance for affixing the printed label to the container, characterised in that the load carrier (4) is hinged swingably to the weighing-out mechanism (3) and is swivellable between a first position, in which the weighing-out of the goods, the printing-out of the label and the transportation of the label to the label issuance (11) are effected, and a second position, in which the container is located, for the sticking-on of the label, in the region of the label issuance (11).

**2.** A self-service weighing machine according to claim 1, characterised by a temporarily effective retaining mechanism (15), connected in a reaction-free manner to the weighing-out mechanism (3), for the arresting of the load carrier (4) in its first position and for the release of the load carrier (4) for the purpose of swivelling into its second position.

**3.** A self-service weighing machine according to claim 2, characterised in that the retaining mechanism (15) is magnetically effective.

**4.** A self-service weighing machine according to claim 3, characterised in that the retaining mechanism (15) has an electromagnet which in its energised state holds the load carrier (4) fitted at least with an insert body made of ferromagnetic material in its first position and in the non-energised state frees the load carrier (4) for the swivelling into the second position.

**5.** A self-service weighing machine according to claim 4, characterised in that the electromagnet in its energised state exerts an attractive force on the load carrier (4).

**6.** A self-service weighing machine according to claim 3, characterised in that the retaining mechanism (15) comprises a permanent magnet which holds the load carrier (4) equipped at least with one insert body made of ferromagnetic material by attractive force in its first position, and an electromagnet which in its energised state exerts on the load carrier (4) a repelling force which is greater than the attractive force exerted by the permanent magnet.

**7.** A self-service weighing machine according to claim 1, characterised in that the load carrier (4) is so designed that a container in the form of a bag (8), in particular a foil bag, can be suspended from it, only after the formation of a knot (9) sealing the bag (8), under the drawn-in knot (9).

**8.** A self-service weighing machine according to claim 7, characterised in that the load carrier (4) has substantially the shape of a plate which has an aperture (6) which is accessible through a slot (7) open towards the plate edge and is smaller than a knob (9) formed on the bag (8).

9. A self-service weighing machine according to claim 8, characterised in that linking on to the substantially horizontally aligned plate of the load carrier (4), on the side facing the label issuance (11), is a second plate (13) which is directed obliquely downwards and away from the label issuance (11) and which in the first position of the load carrier (4) lies at a distance from the label issuance (11) and has a window (14) lying opposite to the label issuance (11) and prevents a pendulum motion of a suspended bag (8).

**Revendications**

1. Balance de libre-service pour de la marchandise placée dans un récipient, en particulier dans un sachet ou poche, comportant un dispositif de pesage et un support de charge joint à celui-ci auquel on accroche le récipient rempli de marchandise, un appareil imprimeur pour l'impression d'une étiquette adhésive autocollante qui contient des indications déduites de l'opération de pesage et du prix de base de la marchandise, et une sortie d'étiquette pour l'application de l'étiquette imprimée sur le récipient, caractérisée par le fait que le support de charge (4) est articulé au dispositif de pesage (3) et peut tourner entre une première position dans laquelle ont lieu le pesage de la marchandise, l'impression de l'étiquette et l'amenée de celle-ci à la sortie d'étiquette (11), et une deuxième position dans laquelle le récipient se trouve dans la zone de la sortie d'étiquette (11) pour le collage de l'étiquette.

2. Balance de libre-service selon la revendication 1, caractérisée par un dispositif de maintien (15) joint sans réaction au dispositif de pesage (3) et agissant temporairement qui arrête le support de charge (4) dans sa première position et le libère pour qu'il aille dans sa deuxième position.

3. Balance de libre-service selon la revendication 2, caractérisée par le fait que le dispositif de maintien (15) agit par voie magnétique.

4. Balance de libre-service selon la revendication 3, caractérisée par le fait que le dispositif de maintien (15) présente un électro-aimant qui, à l'état alimenté, maintient dans sa première position le support de charge (4) pourvu au moins d'un corps rapporté en matière ferromagnétique et, à l'état non alimenté, libère le support de charge (4) pour qu'il aille dans sa deuxième position.

5. Balance de libre-service selon la revendication 4, caractérisée par le fait que l'électro-aimant, à l'état alimenté, exerce une force d'attraction sur le support de charge (4).

6. Balance de libre-service selon la revendication 3, caractérisée par le fait que le dispositif de maintien (15) comprend un aimant permanent qui maintient dans sa première position, par force d'attraction, le support de charge (4) pourvu au moins d'un corps rapporté en matière ferromagnétique, et un électro-aimant qui, à l'état alimenté, exerce sur le support de charge (4) une force répulsive qui est plus grande que la force d'attraction exercée par l'aimant permanent.

7. Balance de libre-service selon la revendication 1, caractérisée par le fait que le support de charge (4) est conçu de façon qu'un récipient en forme de sachet ou poche (8), en particulier d'un sac en feuille, ne puisse y être accroché qu'après formation d'un noeud (9) fermant le sac (8), par ce noeud(9).

8. Balance de libre-service selon la revendication 7, caractérisée par le fait que le support de charge (4) a sensiblement la forme d'une plaque qui présente une ouverture (6) qui est accessible par une fente (7) ouverte vers le bord de la plaque et est plus petite qu'un noeud (9) fait au sac (8).

9. Balance de libre-service selon la revendication 8, caractérisée par le fait qu'à la plaque orientée sensiblement horizontalement du support de charge (4) se joint sur le côté dirigé vers la sortie d'étiquette (11) une deuxième plaque (13) descendant obliquement en s'écartant de la sortie d'étiquette (11) qui, lorsque le support de charge (4) est dans sa première position, est écartée de la sortie d'étiquette (11), et qui présente une fenêtre (14) située en face de la sortie d'étiquette (11) et empêche un balancement du sac (8) accroché.

Fig. 1